# EUROPEAN PATENT APPLICATION

(11) **EP 2 881 437 A1**
(43) Date of publication of application: **10.06.2015**
(21) Application number: 13827434.5
(22) Date of filing: 01.08.2013
(51) Int. Cl.: C08L 69/00, C08J 5/06, C08K 9/04, D06M 15/564

(54) **THERMOPLASTIC RESIN COMPOSITION**

(30) Priority: 06.08.2012 JP 2012174178
(71) Applicant: Daicel Polymer Ltd., Tokyo 108-8231 (JP)
(72) Inventor: TAI Toshihiro, Himeji-shi Hyogo 671-1123 (JP)
(74) Representative: Grünecker Patent- und Rechtsanwälte PartG mbB
(86) International application number: PCT/JP2013/070859
(87) International publication number: WO 2014/024768

(57) **Abstract**

To provide a thermoplastic resin composition capable of providing a molded article having a good electromagnetic shielding property. A thermoplastic resin composition containing: (A) 50 to 95% by mass of a thermoplastic resin containing a polycarbonate resin; and (B) 5 to 50% by mass of a carbon fiber bundle which is bundled by a sizing agent containing polyurethane, or of carbon fibers in the state in which the carbon fiber bundle is loosened, wherein the sizing agent containing the polyurethane has a tensile elongation (JIS K-7113) of 500% or more.

## Description

### Field of the invention

The present invention relates to a thermoplastic resin composition capable of providing a molded article having good electromagnetic shielding property and mechanical strength, a production method thereof, and a molded article obtained from the composition described above.

### Background of the invention

Resin compositions, in which carbon fibers or metal-coated carbon fibers are blended with a thermoplastic resin for obtaining an electromagnetic shielding property, are known.

The carbon fibers are used in a state in which they are bundled using a sizing agent in terms of a handling property.

JP-B 4505081 describes an invention of an aromatic polycarbonate resin composition containing (A) 100 parts by weight of a specific aromatic polycarbonate, and (B) 3 to 100 parts by weight of carbon fibers, which contain an organic substance (a sizing agent) having at least one of a urethane resin and an epoxy resin in a deposition amount of 1 to 8% by weight.

Examples of a sizing agent are listed in paragraph 0027, and it is described that, in Example (paragraph number 0061), carbon fibers are subjected to a bundling treatment with either a mixture of an epoxy compound and a urethane compound, or an epoxy compound.

JP-A 2006-45385 describes an invention of an electromagnetic wave-shielding thermoplastic resin composition. It is described that, in paragraph number 0017, metal-coated carbon fibers, which are bundled by various sizing agents, are used, and, in paragraph number 0020, an epoxy resin and a urethane resin are preferable as the sizing agent.

In Example (paragraph number 0036), an aqueous emulsion of a urethane resin is used as the sizing agent.

### Summary of the invention

The present invention provides a thermoplastic resin composition capable of providing a molded article having particularly high electromagnetic shielding property by using a specific sizing agent, a production method thereof, and a molded article obtained from the resin composition.

The present invention provides a thermoplastic resin composition containing:
(A) 50 to 95% by mass of a thermoplastic resin containing a polycarbonate resin; and
(B) 5 to 50% by mass of a carbon fiber bundle which is bundled by a sizing agent containing polyurethane, or of carbon fibers in the state in which the carbon fiber bundle is loosened, wherein
the sizing agent containing the polyurethane has a tensile elongation (JIS K-7113) of 500% or more.

The present invention also relates to a method for producing the thermoplastic resin composition described above, containing the step of:
mixing a thermoplastic resin containing a polycarbonate resin with a carbon fiber bundle, which is bundled by a sizing agent containing polyurethane, wherein
the component (B) is contained as the carbon fiber bundle, which is bundled by the sizing agent containing the polyurethane.

The present invention also relates to a method for producing the thermoplastic resin composition described above, containing the step of:
melt-kneading a thermoplastic resin containing a polycarbonate resin with a carbon fiber bundle, which is bundled by a sizing agent containing polyurethane, wherein
the component (B) is contained in the state in which the carbon fiber bundle, which is bundled by the sizing agent containing the polyurethane, is loosened.

The present invention also relates to a molded article obtained by molding the thermoplastic resin composition described above.

The present invention also relates to the molded article described above used for a product required to have an electromagnetic shielding property, a product containing the molded article described above and being required to have an electromagnetic shielding property, or use of the molded article described above for a product, which is required to have an electromagnetic shielding property.

Molded articles obtained from the thermoplastic resin composition of the present invention have an excellent electromagnetic shielding property.

### Brief description of drawings

[Fig. 1] Fig. 1 is a schematic view showing a dispersion state of carbon fibers in a molded article obtained from a composition of the present invention.
[Fig. 2] Fig. 2 is a schematic view showing a dispersion state of carbon fibers in a molded article obtained from a composition of a prior art.

### Detailed description of the invention

### <Thermoplastic resin composition>

The component (A) used in the present invention may be a polycarbonate resin alone or a mixture of the polycarbonate resin and another thermoplastic resin.

The polycarbonate resin is a known one. For example, a resin obtained by reacting a bivalent phenol with a carbonate ester in a melting method can be used, and resins described in JP-B 4505081 and JP-A 2006-45385 can also be used.

The other thermoplastic resin may include styrene resins (polystyrene, an AS resin, an ASB resin, and the like), olefin resins such as polyethylene or polypropylene, polyphenylene sulfide resins, polymethacrylate, polyamide resins, polyester resins, polysulfone resins (PSF), polyacetal, polyether ether ketone (PEEK), polyether imide (PEI), polyether sulfone (PES), polyamide imide (PAI), polyimide (PI), and the like.

When the component (A) is the mixture of the polycarbonate resin and the other thermoplastic resin, the content of the polycarbonate resin is preferably from 50 to 95% by mass, more preferably from 70 to 90% by mass.

The component (B) is a carbon fiber bundle, which is bundled by a sizing agent containing polyurethane, or carbon fibers in the state in which the carbon fiber bundle described above is loosened.

Although the carbon fiber bundle, which is bundled by the sizing agent containing the polyurethane, is used as a raw material for the production, when melt-kneaded with the component (A), the bundle turns into the carbon fibers in the state in which the carbon fiber bundle described above is loosened.

Carbon fibers are known one. Pitch carbon fiber and PAN carbon fiber can be used, and, for example, carbon fibers described in JP-B 4505081 and JP-A 2006-45385 can be used.

The sizing agent containing the polyurethane has a tensile elongation (JIS K 7113) of 500% or more, preferably 700% or more.

As such a sizing agent containing the polyurethane, products can be used which are selected from products of VONDIC (trade name), VONDIC (trade name) 2200 series, Hydran (trade name) HW series, Hydran AP series, Hydran ADS, and Hydran (trade name) CP series, which are commercially available from DIC Corporation, and satisfy the tensile elongation described above.

The component (B) can be produced by coating the carbon fiber bundle with an emulsion including the sizing agent containing the polyurethane, and drying it.

In the component (B), it is preferable to contain the sizing agent, which contains the polyurethane, in an amount of 0.1 to 10 parts by mass, based on 100 parts by mass of the carbon fibers, more preferably 1 to 5 parts by mass.

The content ratio of the component (A) and the component (B) is:
in the case of the component (A), from 50 to 95% by mass, preferably from 60 to 90% by mass, more preferably from 65 to 80% by mass; and
in the case of the component (B), from 5 to 50% by mass, preferably from 10 to 40% by mass, more preferably from 20 to 35% by mass.

The composition of the present invention may contain, within a range where the problems of the present invention can be solved, various organic or inorganic fillers, thermal stabilizers, light-stabilizers, antistatic agents, antioxidants, flame retardants, mold-releasing agents, foaming agents, antibacterials, nucleating agents, coloring agents, plasticizers, and the like.

### <Method for producing thermoplastic resin composition>

The composition of the present invention can be produced by adopting
(I) a production method containing the step of mixing the thermoplastic resin containing the polycarbonate resin with the carbon fiber bundle, which is bundled by the sizing agent containing the polyurethane; or
(II) a production method containing the step of melt-kneading the thermoplastic resin containing the polycarbonate resin with the carbon fiber bundle, which bundled by the sizing agent containing the polyurethane.

In the thermoplastic resin composition, obtained by adopting the production method (I), the component (B) is contained as the carbon fiber bundle, which is bundled by the sizing agent containing the polyurethane.

In the thermoplastic resin composition, obtained by adopting the production method (II), the component (B) is contained in the state in which the carbon fiber bundle, which is bundled by the sizing agent containing the polyurethane, is loosened.

Methods in which the components are mixed in a mixer (a tumbler, a V-blender, a Henschel mixer, a Nauta mixer, a ribbon mixer, a mechanochemical apparatus, an extrusion mixer, or the like) can be applied to the production method (I).

Methods in which after pre-mixing is performed using the method described above, melt-kneading is performed in a melt-kneader (a single screw extruder, a vent-type twin screw extruder, or the like), and pelletizing is performed in a pelletizing device (a pelletizer, or the like) can be applied to the production method (II).

### <Molded article>

The molded article of the present invention obtained by molding the thermoplastic resin composition described above in a mold processing machine into a desired shape.

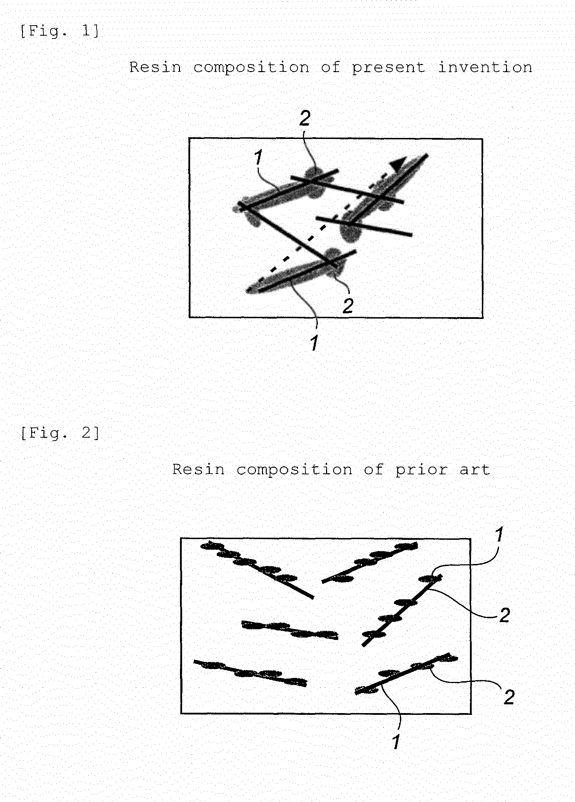

The molded article, obtained from the resin composition of the present invention, has an electromagnetic shielding property higher than that of a prior art product. The reason can be thought as described below. Referring to Fig. 1 and Fig. 2, the explanation is made.

As shown in Fig. 1, it can be assumed that when the composition of the present invention is melt-kneaded, carbon fibers 1 exist in the state in which they are intertwined with each other (the state in which they attracted to each other) by the action of the sizing agent 2, because the sizing agent having a tensile elongation of 500% or more is used. Therefore, it can be considered that the carbon fibers 1 exist in a high density, and thus the electromagnetic shielding property is enhanced when formed into a molded article. An arrow in Fig. 1 shows a passage showing conductivity caused by contact of the carbon fibers with each other.

On the other hand, as shown in Fig. 2, it can be considered that in the composition of the prior art, the sizing agent 2 has no elongation enough to intertwine the carbon fibers 1 with each other (enough to attract them to each other) and the carbon fibers 1 exist in the state in which they are dispersed from each other (the state of the low dispersion density), and thus the electromagnetic shielding property is low when formed into a molded article, because the sizing agent whose tensile elongation level is not particularly considered (a sizing agent having a tensile elongation remarkably lower than that of the sizing agent used in the component (B) in the present invention) is used.

The molded article of the present invention can be used as a product which is required to have the electromagnetic shielding property, and is preferable, for example, as housings of various electric and electronic instruments generating electromagnetic waves, and the like.

### Examples

### Examples and Comparative Examples

Carbon fibers (CF) (T700SC-24K-50E manufactured by Toray Industries, Inc.) were washed with acetone, and dried.

Next, 100 parts by mass of the carbon fibers were coated with a sizing agent (emulsion type) shown in Table 1, and then they were dried in an oven at 100°C for 3 hours. After that, the fibers were cut into a length of 4 mm, which were used as the component (B).

Using a polycarbonate resin (PC) (Iupilon H 3000 F manufactured by Mitsubishi Engineering-Plastics Corporation) as the component (A), and the carbon fiber bundles as the component (B), they were kneaded in a twin screw extruder (TEX 30 manufactured by The Japan Steel Works, LTD.), and the kneaded product was supplied to a pelletizer, thereby obtaining pellets of the composition.

Using the obtained pellets, injection molding was performed under conditions described below to obtain a square plate of 120 mm x 120 mm x 2 mm.

Injection molding machine: Type: SH 100-NIV manufactured by Sumitomo Heavy Industries Co., Ltd.
Injection speed: 8.5 cm/second
Screw cross-section of screw: 10.2 cm²
Gate size: 2 mm x 7 mm (the minimum cross-section=0.14 cm²)
Injection rate: 86.7 cm³/second
Gate passing line speed: 619 cm/sec

### <Sizing agent used>

### (Sizing agent in Example)

2260 NE: a self-emulsifying type polyurethane emulsion manufactured by DIC Corporation
1940 NE: a self-emulsifying type polyurethane emulsion manufactured by DIC Corporation
HW-920: a self-emulsifying type polyurethane emulsion manufactured by DIC Corporation
HW-930: a self-emulsifying type polyurethane emulsion manufactured by DIC Corporation

### (Sizing agent in Comparative Example)

AP-30: a self-emulsifying type polyurethane emulsion manufactured by DIC Corporation
AP-40 F: a self-emulsifying type polyurethane emulsion manufactured by DIC Corporation
UWS-145: a self-emulsifying type polyurethane emulsion manufactured by Sanyokasei Co., Ltd
CP-7060: a self-emulsifying type polyurethane emulsion manufactured by DIC Corporation

The sizing agents in Examples are distinguished from the sizing agents in Comparative Example in the tensile elongation. A flow starting temperature and a stress at breaking point are shown in Table 1 in order to specifically show polyurethane used in each emulsion, but they are not necessary to exhibit the effects of the present invention.

### <Measurement of sizing agent>

(1) Flow starting temperature (°C): Measurement was performed in accordance with JIS K-7210.
(2) Stress at breaking point (MPa): A sizing agent was coated on a glass plate, which was dried at 100°C for 3 hours to produce a coating film having a thickness of 50 microns. The measurement was performed in accordance with JIS K-7113.
(3) Tensile elongation (%): A sizing agent was coated on a glass plate, which was dried at 100°C for 3 hours to produce a coating film having a thickness of 50 microns. The measurement was performed in accordance with JIS K-7113.

### <Measurement of composition (molded article)>

### (1) Electromagnetic shielding effect (KEC method/electric field wave, magnetic field wave)

Using an MA 8602 B measuring device, manufactured by ANRITSU, a near field electric field/magnetic field shielding property was determined in a KEC method within a frequency range of 0.1 MHz to 100 MHz. The higher the numeric value, the better the electromagnetic shielding property.

### (2) Tensile strength

Using an ISO dumbbell test piece having a thickness of 4 mm, a bending test was performed in accordance with IS0 527, thereby determining a bending strength.

### (3) Bending strength (MPa)

Using an ISO dumbbell test piece having a thickness of 4 mm, a bending test was performed in accordance with IS0 178, thereby determining a bending strength.

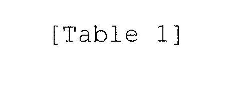

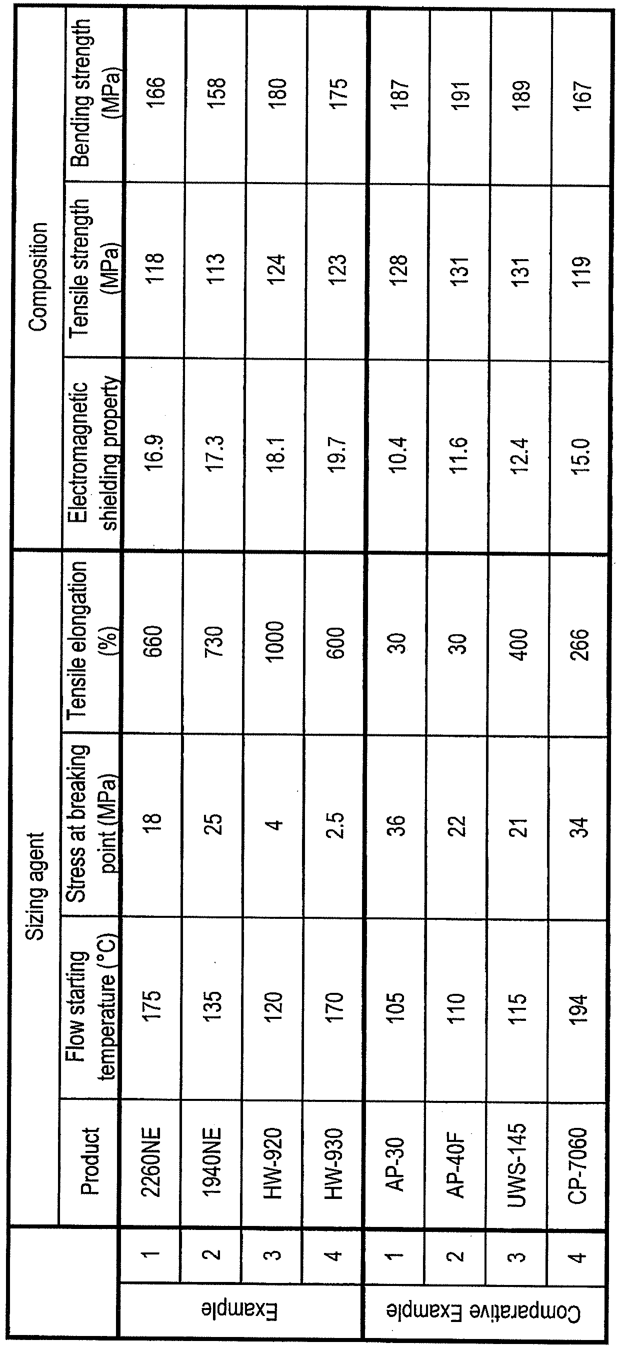

As apparent from the comparison of Examples with Comparative Examples, it was confirmed that the electromagnetic shielding property of the molded article was clearly different depending on the difference of the tensile elongation of the sizing agent contained in the component (B). From those results, it can be considered that when the composition of the present invention is used, the high electromagnetic shielding property is exhibited by the action mechanism as shown in Fig. 1.

## Claims

1. A thermoplastic resin composition comprising:
(A) 50 to 95% by mass of a thermoplastic resin containing a polycarbonate resin; and
(B) 5 to 50% by mass of a carbon fiber bundle which is bundled by a sizing agent containing polyurethane, or of carbon fibers in the state in which the carbon fiber bundle is loosened, wherein
the sizing agent containing the polyurethane has a tensile elongation (JIS K-7113) of 500% or more.

2. The thermoplastic resin composition according to claim 1, wherein the component (B) contains the sizing agent, which contains the polyurethane, in an amount of 0.1 to 10 parts by mass based on 100 parts by mass of the carbon fibers.

3. The thermoplastic resin composition according to claim 1 or 2, wherein the component (A) is a mixture of the polycarbonate resin and a thermoplastic resin selected from the group consisting of a styrene resin, an olefin resin, a polymethacrylate resin, and a polyester resin, and the polycarbonate resin is contained in a content of 50 to 95% by mass in the mixture.

4. A method of producing the thermoplastic resin composition according to any one of claim 1 to 3, comprising the step of:
mixing a thermoplastic resin containing a polycarbonate resin with a carbon fiber bundle, which is bundled by a sizing agent containing polyurethane, wherein
the component (B) is contained as the carbon fiber bundle, which is bundled by the sizing agent containing the polyurethane.

5. A method for producing a thermoplastic resin composition according to any one of claims 1 to 3, comprising the step of:
melt-kneading a thermoplastic resin containing a polycarbonate resin with a carbon fiber bundle, which is bundled by a sizing agent containing polyurethane, wherein
the component (B) is contained in the state in which the carbon fiber bundle, which is bundled by the sizing agent containing the polyurethane, is loosened.

6. A molded article comprising the thermoplastic resin composition according to any one of claims 1 to 3.

7. A molded article obtained by molding the thermoplastic resin composition according to any one of claims 1 to 3.

8. The molded article according to claim 7, which is used for a product required to have an electromagnetic shielding property.

9. A product comprising the molded article according to claim 6 or 7 and being required to have an electromagnetic shielding property.

10. Use of the molded article according to claim 6 or 7 for a product required to have an electromagnetic shielding property.
